# EUROPÄISCHE PATENTSCHRIFT

(11) **EP 3 581 539 B1**
(45) Veröffentlichungstag und Bekanntmachung des Hinweises auf die Patenterteilung: **10.07.2024**
(21) Anmeldenummer: 19187694.5
(22) Anmeldetag: 27.10.2015
(51) Int. Cl.: B66F 9/065, B66F 9/12, B62B 3/06

(54) **PALETTENGUT-ABHEBEVORRICHTUNG**
PALLET GOODS LIFTING DEVICE
DISPOSITIF DE SOULÈVEMENT DE MARCHANDISES PALETTISÉES

(30) Priorität: 06.11.2014 DE 102014016371
(43) Veröffentlichungstag der Anmeldung: 18.12.2019
(62) Teilanmeldung aus: 15787471.0
(73) Patentinhaber: Sprick GmbH Bielefelder Papier- und Wellpappenwerke & Co., 33607 Bielefeld (DE)
(72) Erfinder: Schalk, Bastian, 32758 Detmold (DE); Engemann, Christoph, 34414 Warburg (DE)
(74) Vertreter: Schmid, Nils T.F.

(56) Entgegenhaltungen:
- EP-A1- 2 923 916
- NL-C2- 1 016 255
- US-A- 2 412 184
- US-A- 2 451 226
- US-A- 2 625 355

## Beschreibung

Die Erfindung betrifft eine Palettengut-Abhebevorrichtung zum Be- und Entladen einer Standardpalette, wie einer Europalette oder Europoolpalette. Solche Standardpaletten werden beispielsweise in Europa unter der registrierten Marke EPAL, European Pallet Association e.V., zertifiziert. Es gibt auch Gattungen von Standardpaletten, die Industriepaletten oder Asiapaletten heißen, die eigene Dimensionsspezifikationen haben, die in den vorliegenden Anmeldeunterlagen als Offenbarungsgehalt berücksichtigt sein sollen.

Im Besonderen betrifft die Erfindung eine Abhebevorrichtung zum Be- und Entladen einer Standardpalette mit einem Papierstapelvorrat, der dazu genutzt wird, Verpackungsmaterial zu bilden. Diese Papierstapelvorräte sind häufig in quaderförmigen Papierbahnstapeln in Zick-Zack-Faltung vorrätig. Mit solchen Papierbahnstapeln werden Verpackungsmaschinen bestückt, wie sie beispielsweise in WO 2014/110383 A1 gezeigt sind.

Bei der Erfindung geht es darum, eine Transportgutabhebevorrichtung bezüglich Standardpaletten bereitzustellen, mit der ein sicheres und möglichst verletzungsfreies Abheben des Transportguts von der Palette erfolgen kann. Genauso soll es möglich sein, das Transportgut von einer Lagerposition auf die Standardpalette abzulegen und einen Weitertransport zu einem Verpackungsort zu ermöglichen.

Es gibt verschiedene Möglichkeiten, Transportpaletten anzuheben, beispielsweise mit Gabelstaplern oder Hubwagen mit Einfahrzinken, die in palettenunterseitige Eingreiffreiräume in der Palettentragstruktur der Standardpalette eingreifen können. Allerdings ist es mit diesen Hubvorrichtungen kaum möglich, das Transportgut von der Standardpalette zu trennen.

Transportgutabhebevorrichtungen sind im Bereich der Baustoffversorgung bekannt, wie WO 2010/091689 A1 zeigt. Dort werden Greifeinrichtungen beschrieben, die einen Zugriff von der Oberseite der Standardpalette auf das unempfindliche Transportgut fordert. Diese Palettengut-Abhebevorrichtungen sind aber nicht dazu geeignet, sensible Transportgüter, wie einen Papierstapelvorrat, verletzungsfrei von der Standardpalette abzuheben.

US 2,451,226 betrifft eine Vorrichtung zum Handhaben von Gütern. US 2,451,226 offenbart eine Palettengut-Anhebevorrichtung zum Be- und Entladen einer Transport-Palette mit einer Paletten-Tragstruktur, die seitliche Eingrifffreiräume beispielsweise für einen Gabelstapler bildet, und einer die Paletten-Oberseite bildenden Auflage auf der das jeweilige Transport- oder Palettengut abzulegen ist und die aus mehreren in einem Abstand zueinander unter Ausbildung wenigstens zweier, vorzugsweise von vier, parallel zueinander liegender Längsspalten angeordneten Längsplatten, wie Längsbrettern, besteht, wobei die Längsspalten zur Paletten-Oberseite hin offen sind, umfassend ein Traggestell, eine an dem Traggestell anhebbar gelagerte Zinkenanordnung von wenigstens zwei Zinken mit paralleler Erstreckungsrichtung zum Anheben sowie Anheben des Transportguts auf die Transportpalette, wobei ein Zinkenabstand zweier Zinken an einen Spaltenabstand zweier Längsspalten angepasst ist und zumindest die wenigstens zwei Zinken an die wenigstens zwei Längsspalten derart formangepasst sind, dass sie in die Längsrichtung der Längsspalten einfahrbar sind.

US 2,412,184 betrifft eine Palette. Aus US 2,625,355 ist eine weitere Palette bekannt. NL 1016255 offenbart einen Gabelstapler.

Es ist Aufgabe der Erfindung, die Nachteile des Stand der Technik zu überwinden, insbesondere eine Palettengut-Abhebevorrichtung bereitzustellen, mit der ein Abheben und Auflegen eines empfindlichen Palettenguts, wie eines Papierstapelvorrats, möglichst verletzungsfrei erreicht werden kann.

Diese Aufgabe wird durch die Merkmale von Anspruch 1 gelöst. Danach ist eine Palettengut-Abhebevorrichtung zum Be- oder Entladen einer Palette, wie einer Standardpalette, beispielsweise einer Europalette, vorgesehen. Die Standardpalette umfasst eine Palettentragstruktur, meist aus Holz, insbesondere aus verstrebten Holzklötzen, wobei die Palettentragstruktur üblicherweise seitliche Eingreiffreiräume unterhalb der Palettenauflage aufweist, in die Gabelstaplerzinken einfahren können, um die Standardpalette samt dem Transportgut anzuheben. Des Weiteren hat die Standardpalette eine die Paletten-Oberseite bildende Auflage, auf der das jeweilige Transport- oder Palettengut abzulegen ist und die aus mehreren in einem Abstand zueinander unter Ausbildung wenigstens zweier, vorzugsweise von vier, parallel zueinander liegender Längsspalten angeordneten Längsplatten, wie Brettern, besteht. Die Längsspalten sind zur Paletten-Oberseite hin offen und haben eine Mindesthöhe ausgehend von einer Längs- oder Breitenstrebe von der Stärke der Längsplatten. Die erfindungsgemäße Palettengut-Abhebevorrichtung umfasst ein Traggestell und eine an dem Traggestell anhebbar gelagerte Zinkenanordnung von wenigstens zwei, vorzugsweise vier Zinken, mit paralleler Erstreckungsrichtung zum Anheben sowie Aufnehmen des Tranportguts von der Standardpalette und/oder zum Ablegen des Transportguts auf die Standardpalette. Es sei klar, dass die Anzahl der Zinken mit der Anzahl der Längsspalten der Auflage vorzugsweise gleich sein kann. Um die Zinkenanordnung anzuheben, ist ein Hubantrieb vorgesehen, der manuell, elektrisch, pneumatisch oder hydraulisch betrieben sein kann. Vorzugsweise ist ein manueller Hubantrieb bevorzugt, der an dem Traggestell gelagert ist und mit dem Fuß einer Bedienperson betätigbar ist. Erfindungsgemäß ist ein Zinkenparallelabstand zweier Zinken an einen Längsspaltenabstand zweier Längsspalten angepasst und zumindest die wenigstens zwei Zinken sind an die wenigstens zwei Längsspalten derart formangepasst, dass sie in Längsrichtung der Längsspalten einfahrbar sind, insbesondere ohne dass der eingefahrene Zinkenabschnitt über die Paletten-Oberseite ragt. Es zeigte sich, dass die üblicherweise zwischen den die Auflage bildenden Brettern der Standardpalette vorliegenden Längsspalten ausreichend groß sind, dass entsprechend dimensionierte Zinken beispielsweise aus Metall oder Kunststoff stark genug sind, um in den Längsspalten einzufahren und das Transportgut verletzungsfrei von der Standardpalette anzuheben und es darauf abzulegen. Es sei klar, dass die Zinken derart dimensioniert sind, dass sie entweder in der Längsrichtung horizontal in den Längsspalt eingefahren werden können, wenn auf der Auflage der Standardpalette ein Transportgut, wie der Papierstapelvorrat, steht. Zum Ablegen des Transportguts auf die Auflage der Standardpalette können die Zinken die nach oben offenen Längsspalten in Vertikalrichtung belegen, wobei, sobald die Zinken in Vertikalrichtung versenkt sind, das Transportgut auf der Auflage abgelegt ist.

Üblicherweise sind vier Längsspalten in einer Standardpalette vorgesehen, so dass eine erfindungsgemäße Palettengut-Abhebevorrichtung vier oder drei, sogar zwei entsprechend an die jeweilige Längsspaltenform angepasste Zinkenformen aufweist.

Bei einer bevorzugten Ausführung der Erfindung ist ein freier Endabschnitt der wenigstens zwei Zinken kleiner als das Dimensionierungsmaß der Längsspalten bemessen. Es sei klar, dass die Zinkenhöhe von dem Endabschnitt über den daran anschließenden Zinkenmittelabschnitt bis zu einer die Zinken verbindende Zinkenbasis der Zinkenanordnung insbesondere kontinuierlich ansteigen kann, so dass der Zinkenabschnitt zumindest teilweise über die Paletten-Oberseite ragen kann, solange der Großteil des Transportguts beim Versenken der Zinken in den Längsspalten derart auf der Auflage der Palette abgelegt ist, dass beim anschließenden horizontalen Herausziehen der Zinken die Haftreibung des Transportguts auf der Palettenauflage größer als an dem vorragenden Zinkenabschnitt ist, an dem das Transportgut noch aufliegt. Es sei vorzugsweise gewährleistet, dass zum Aufnehmen des Transportguts auf die Zinken das freie Ende der Zinken beim Einfahren zuerst kontaktlos zu dem auf der Paletten-Oberseite liegenden Transportgut bleibt, bis im Verlauf des Zinkenabschnitts die Zinkenhöhe die Palette-Oberseite erreicht, wodurch allmählich das Transportgut durch weiteres Einfahren angehoben werden kann.

Vorzugsweise sind die wenigstens zwei Zinken der Zinkenanordnung über den größten Teil ihrer Längserstreckung derart dimensioniert, dass sie in den Längsspalt einfahrbar oder absenkbar sind, ohne dass deren Zinkenhöhe die Paletten-Oberseite überragt.

Weitere Eigenschaften und Vorteile der Erfindung sind in den Unteransprüchen angegeben.

Bei einer Weiterbildung der Erfindung definiert sich die Abmessung der wenigstens zwei Zinken durch eine Höhenabmessung und eine Breitenabmessung, welche Abmessungen im Längsverlauf vorzugsweise konstant sind. An der Zinkenspitze kann eine Verjüngung vorgesehen sein, um das Einfahren beim Entladen der Transport-Palette zu erleichtern.

Die Höhenabmessung der wenigstens zwei Zinken, insbesondere an deren Transportgut-Tragabschnitt, der den Großteil des Abschnitts der Zinken ausmacht, an dem das Transportgut letztendlich aufgenommen ist, beträgt vorzugsweise höchstens 25 mm oder höchstens 22 mm. Ist ein Längsspalt der Transport-Palette mit einer Höhe von weniger als 20 mm aber größer als 15 mm ausgebildet, sollte eine entsprechende Höhenabmessung zwischen 15 mm und 20 mm liegen.

Die Breitenabmessung der Zinken, insbesondere an dem Transportgut-Tragabschnitt, soll höchstens 40 mm oder höchstens 30 mm betragen, je nachdem wie breit die Längsspalten der Paletten sind. Vorzugweise sind die Breiten- und Höhenabmessung festgelegt und im Längsverlauf der Zinken im Wesentlichen unverändert.

Um die erfindungsgemäße Palettengut-Abhebevorrichtung an verschiedene Paletten-Konfigurationen oder -Strukturen anpassen zu können, können die Zinken oder die gesamte Zinkenanordnung gegenüber der Abhebevorrichtung austauschbar sein, damit diejenigen Zinken an der erfindungsgemäßen Abhebevorrichtung montiert werden können, welche für den Einsatz mit einer bestimmten Transport-Palette zum erfindungsgemäßen Einsatz geeignet sind.

Bei einer bevorzugten Ausführung der Erfindung hat die Zinkenanordnung genau vier Zinken, wobei die Zinken in Querrichtung gemäß den Längsspalten-Abständen zueinander anzuordnen sind. Die beiden äußeren Zinken liegen vorzugsweise in einem Quermittelabstand von 100 mm bis 120 mm auseinander, wobei als Maß für den Quermittelabstand der Längsmittelachsenabstand der Zinken ist. Der Quermittelabstand in Querrichtung zwischen den Mittelzinken liegt vorzugsweise bei 140 mm bis 160 mm.

Bei einer Weiterbildung der Erfindung sind die wenigstens zwei Zinken an einem insbesondere fahrbaren Gestell, wie einem Fahrgestell, in Höhenrichtung durch eine Hubeinrichtung verfahrbar, die an ein Gestell gelagert ist und dazu konstruiert ist, das Transportgut höchstens von einer unteren Ausgangsposition 10 mm bis 100 mm anzuheben. Die Hubeinrichtung kann ein Getriebe, wie ein Schrittgetriebe, aufweisen, das von einer Bedienperson mittels Fuß betätigbar ist. Zudem hat die Hubeinrichtung eine Absenkeinrichtung, die bei deren Betätigung die Zinkenanordnung unter dem Einfluss deren Gewichtskraft und gegebenenfalls der Gewichtskraft des Transportguts insbesondere gedämpft in eine Transportgutübergabeposition absenken kann. Dabei ist die Absenkeinrichtung dazu ausgelegt, selbst bei mehrmaligen Erhöhungsschritten nach Aktivierung die Zinkenanordnung vollständig bis zu der Ausgangsposition abzusenken.

Bei einer bevorzugten Ausführung der Erfindung ist die Hubeinrichtung mit einer vertikal begrenzten Hubamplitude ausgelegt, die von einer unteren Ausgangsstellung angehobene Hubstellung entfernt ist um weniger als 20 cm, insbesondere 15 oder 10 cm. Die untere Ausgangsstellung der Hubeinrichtung ist durch einen Anschlag realisiert, gegen den die Zinkenanordnung oder ein entsprechendes Bestandteil der Hubeinrichtung schlägt, damit eine Weiterverlagerung der Zinkenanordnung in Vertikalrichtung nach unten begrenzt ist. Die obere Anhebestellung wird dadurch festgelegt, dass die Zinkenanordnung oder ein Bestandteil einer Hubeinrichtung mit einer Feststelleinrichtung, wie eine Rasteinrichtung, zusammenwirkt, um eine weitere Verlagerung der Zinkenanordnung durch die Hubeinrichtung in Vertikalrichtung zu vermeiden und insbesondere die Zinkenanordnung samt Palettengut in der Hebestellung zu halten. In der Anhebestellung kann das Palettengut von der Palette weg oder zur Palette hin gefahren werden. Bei einer Weiterbildung der Erfindung ist die Hubeinrichtung durch eine Wippenstruktur gebildet, welche einen zinkenanordnungsseitigen Lasthebelarm und einen betätigungsseitigen Betätigungshebelarm aufweist. Die jeweiligen Hebellängen sind durch den jeweiligen Abstand von einer gestellfesten Schwenklagerachse der Wippenstruktur hin zur Krafttragstelle bzw. Kraftableitstelle bemessen. Um ein Anheben auch schwerer Lasten mittels der Hubeinrichtung zu erleichtern, ist die Betätigungshebelarmlänge größer, insbesondere wenigstens doppelt, dreifach oder vierfach so groß, als die Lasthebelarmlänge. Vorzugweise sind der Betätigungshebelarm und der Lasthebelarm aus einem Materialstück gebildet.

Um die Schwenkbewegung der Kraftübertragungsstelle an dem Lasthebelarm in eine vertikale Hubewegung umzuwandeln, ist die Zinkenanordnung über eine Mehrscharniergelenkhalterung an den Lasthebelarm gekoppelt. Um zu gewährleisten, dass eine Bedienperson an einer vorbestimmten, ortsdefinierten Krafteintragstelle des Betätigungshebelarms die Hubeinrichtung betätigt, kann ein Tretpedal insbesondere am Ende des Betätigungshebelarms angeordnet sein.

Die untere Ausgangsstellung der Zinkenanordnung ist vorzugsweise derart eingestellt, dass die Zinkenanordnung im Wesentlichen auf Vertikalhöhe der Längsspalten der Transport-Palette liegt. Die Anhebestellung ist dadurch festgelegt, dass die Zinkenanordnung geringfügig, vorzugsweise über 1 cm, vertikal oberhalb der oberen Auflagefläche der Transport-Palette festgelegt ist.

Zum Feststellen der Zinkenanordnung in der Anhebestellung ist vorzugsweise eine insbesondere mittels einer Feder vorgespannte Raste vorgesehen, die in deren Rastzustand vorgespannt ist. Die Zinkenanordnung kann die Raste vorzugsweise längs einer schrägen Anlauffläche entgegen der Vorspannung aus dem Rastzustand verlagern. Die Zinkenanordnung oder ein Bestandteil der Hubeinrichtung, wie der Betätigungshebelarm oder das Tretpedal, sind derart mit einem Einrastfreiraum ausgebildet, dass bei Einnehmen der Anhebeposition die Federvorspannung veranlasst, dass die Raste in den Einrastfreiraum einschnappt. Mittels einer Freigabeeinrichtung kann die Raste entgegen der Vorspannung aus dem Rastzustand in einen Freigabezustand verbracht werden. Bei Betätigung der Freigabeeinrichtung gelangt die Zinkenanordnung unter dem Einfluss der Gewichtskraft in die untere Ausgangsposition.

Vorzugsweise ist die tiefste Absenkposition der Zinkenanordnung niedriger als die entsprechende Höhe der Transport-Palette. Vorzugsweise ist die Minimalhöhe (gerechnet von der Abrollebene des Fahrgestells oder Abstellebene des Traggestells) zum Absenken der Zinkenanordnung von wenigstens 10 mm kleiner als die Höhe der Auflage der Transport-Palette, die beispielsweise bei 90 mm bis 100 mm liegt. Die Absenkbewegung der Zinkenanordnung kommt zum Stillstand, sobald die Zinkenanordnung an einem Querbalken der Palette anschlägt, an welchen die Platten- oder Bretterauflage der Paletten-Tragstruktur befestigt ist.

Die Anhebebewegung der Zinkenanordnung kann auch durch Anschlag an einem Traggestell festen Anschlag begrenzt sein.

Bei einer Weiterbildung der Erfindung hat ein Fahrgestell der erfindungsgemäßen Palettengut-Abhebevorrichtung in Draufsicht eine U-Form oder eine H-Form, wobei die seitlich ausgelagerten, sich parallel zu den Zinken der Zinkenanordnung erstreckenden Schenkel, welche die Räder des Fahrgestells tragen, durch eine Querstrebe des Fahrgestells miteinander starr verbunden sind, um ein formsteifes Fahrgestell zu bilden. Die Querstrebe dient auch dazu, die Hubeinrichtung samt deren Getriebe aufzunehmen, wozu die Querstrebe hohl ausgeführt ist. Auf diese Weise ist ein gehäuseartiger Schutz für die Mechanik der Hubeinrichtung vorgesehen.

Bei einer bevorzugten Ausführung der Erfindung hat das Fahrgestell wenigstens zwei vorzugsweise feststellbare Räder, wobei eine Dreirad- oder Vierradanordnung bevorzugt ist. Die wenigstens zwei Räder sind derart in einem zur Längsrichtung senkrechten Abstand voneinander insbesondere an den Schenkeln des Fahrbahngestells angeordnet, dass sie in Längsrichtung parallel seitlich an den Längsseiten der Transport-Palette vorbei rollen. Die Räder und der Querträger bilden eine Brücken-/Pfeilerkonstruktion über die Seitenerstreckung der Transport-Palette. Wenigstens eines der Räder ist an dem seitlich ausgelagerten Schenkel des oben geformten Gestells angeordnet.

Bei einer bevorzugten Ausführung der Erfindung hat das Fahrgestell wenigstens zwei vorzugsweise feststellbare Räder, insbesondere ein in Längsrichtung vorderes Radpaar und ein hinteres Radpaar. Ein Vorderrad und ein Hinterrad sind jeweils an einem der Schenkel des Fahrgestells angeordnet. Ein Abstand der jeweils zugeordneten Räder in Querrichtung beträgt mindestens 800 mm und insbesondere höchstens 1200 mm oder 1500 mm.

Das Fahrgestell bildet in Draufsicht eine in Zinkenerstreckungsrichtung offene Rahmenstruktur, welche durch Querträger sowie den sich im Wesentlichen parallel zu den Zinken erstreckenden Schenkeln gebildet ist. Bei einer Draufsicht hat das Fahrgestell eine U- oder H- oder V-Form. Auf diese Weise formt das Fahrgestell eine Einfahröffnung, in die die Palette einfahren kann, d.h. so dass die Schenkel an der Palette vorbeifahren können. Die lichte Öffnungsweite der Einfahröffnung ist größer als die Breiten- oder Längsabmessung der Palette.

Bei einer bevorzugten Ausführung der Erfindung sind an dem insbesondere fahrbaren Gestell seitliche Stützen für das Transportgut unverstellbar befestigt. Die Stützen sind als Rahmen ausgeführt, der insbesondere derart positioniert ist, dass eine untere Längsstrebe des Rahmens auf der Höhe liegt, bis zu der die Zinken maximal anhebbar sind. An dem Rahmen kann beispielsweise der anzuhebende Papierbahnstapel gleiten, wodurch eine Vertikalführung für das Transportgut besteht.

Bei einer Weiterbildung der Erfindung hat die Zinkenanordnung eine insbesondere zu der Zinkenerstreckung senkrecht liegende Trägerbasis, die beweglich an einem Gestell der Palettengut-Abhebevorrichtung gelagert ist. Insbesondere kann die Trägerbasis seitlich in Querrichtung relativ zu dem Traggestell oder dem Fahrgestell verstellt werden, um eine Anpassung an die Längsspaltenkonfiguration der Transport-Palette zu gewährleisten. Die Trägerbasis ist vorzugsweise über eine Verschiebe- und Feststelleinrichtung an dem Traggestell der Palettengut-Abhebevorrichtung gelagert, wobei die Verschiebe- und Feststelleinrichtung auch ein vollständiges Austauschen der Zinkenanordnung zulässt.

Bei einer bevorzugten Ausführung der Erfindung sind die Zinken an dem Gestell, insbesondere längs der Trägerbasis der Zinkenanordnung, in Querrichtung Q verstellbar und fixierbar, um an einen unterschiedlichen Längsspaltenabstand anpassbar zu sein. Dabei kann vorzugsweise die Trägerbasis vorbestimmte Positionsrasten für die Zinken aufweisen, deren Position der Lage der Längsspalten unterschiedlicher Standardpaletten entspricht. Auf diese Weise ist die erfindungsgemäße Palettengut-Abhebevorrichtung an jeglichen Aufbau einer heutigen oder zukünftigen Transport-Palette anpassbar, solange diese Längsspalten aufweist, in die die entsprechend formangepassten Zinken ein-, ausfahren und/oder versenkt werden können.

Bei einer bevorzugten Ausführung der Erfindung sind die Zinken an einer Unterseite einer insbesondere stabförmigen Trägerbasis befestigt, sodass im eingefahrenen Zustand der Zinken in den Längsspalten der Standardpalette die Trägerbasis oberhalb der Auflage der Standardpalette liegt. Die Trägerbasis kann in einen Hohlraum der Querstrebe des Gestells linear in Höhenrichtung gelagert sein, um von der Hubvorrichtung betätigbar zu sein.

Des Weiteren betrifft die Erfindung ein Baukastensystem mit einer Palettengut-Abhebevorrichtung der erfindungsgemäßen Art. Zudem hat das Baukastensystem einen Satz Zinkenanordnung und/oder Zinken, aus der diejenigen Zinken bzw. diejenige Zinkenanordnung herangezogen und mit der entsprechenden Transport-Palette erfindungsgemäß kooperieren kann. Dafür sind die Zinkenanordnung oder die wenigstens zwei Zinken an der Abhebevorrichtung austauschbar befestigt, um einsatzgemäß de- und anmontiert zu werden.

Weitere Vorteile, Merkmale und Eigenschaften der Erfindung sind durch die folgende Beschreibung einer bevorzugten Ausführung der Erfindung anhand der beiliegenden Zeichnungen verdeutlicht, in denen zeigen:
- Figur 1: eine perspektivische Ansicht einer erfindungsgemäßen Palettengut-Abhebevorrichtung, die mit einem Papierstapelvorrat beladen ist und vor einer Standardpalette steht, um den Papierstapelvorrat neben zwei bereits abgestellten Papierstapeln abzulegen;
- Figur 2: ist eine perspektivische Detailansicht gemäß Figur 1, bei der die Palettengut-Abhebevorrichtung in die Standardpalette eingefahren ist, um das Palettengut abzulegen;
- Figur 3: ist eine Detailansicht gemäß Figur 2, wobei das Transportgut auf die Palette abgelegt ist und die Palettengut-Abhebevorrichtung aus der Palette ausgefahren ist;
- Figur 4: eine perspektivische Rückansicht der erfindungsgemäßen Palettengut-Abhebevorrichtung gemäß Figur 1, wobei die Palettengut-Abhebevorrichtung über die Transport-Palette eingefahren ist, noch ohne das Palettengut auf die Transport-Palette abgelegt zu haben;
- Figur 5: eine Draufsicht auf eine erfindungsgemäße Palettengut-Anhebevorrichtung;
- Figur 6: eine Seitenansicht einer erfindungsgemäßen Palettengut-Anhebevorrichtung;
- Figur 7: eine Rückansicht einer erfindungsgemäßen Palettengut-Anhebevorrichtung;
- Figur 8: eine perspektivische Detailansicht der erfindungsgemäßen Palettengut-Anhebevorrichtung gemäß Figur 7;
- Figur 9: eine Schnittansicht der erfindungsgemäßen Palettengut-Anhebevorrichtung gemäß Figur 5 entlang der Schnittlinie A-A, wobei die Zinkenanordnung sich in einer unteren Ausgangsposition befindet; und
- Figur 10: eine Schnittansicht der erfindungsgemäßen Palettengut-Anhebevorrichtung gemäß Figur 5 entlang der Schnittlinie A-A, die die Zinkenanordnung in einer maximal angehobenen Position zeigt.

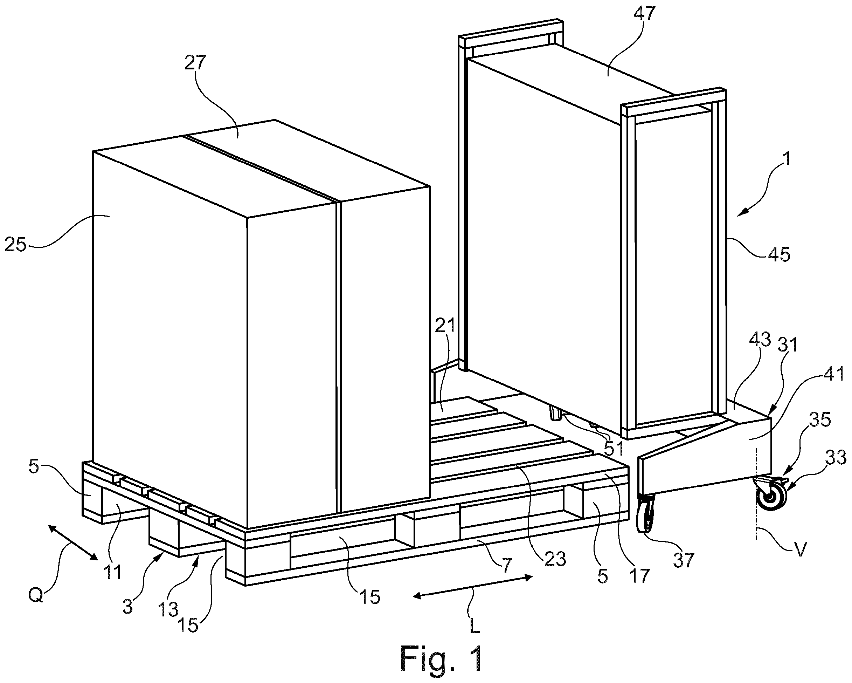

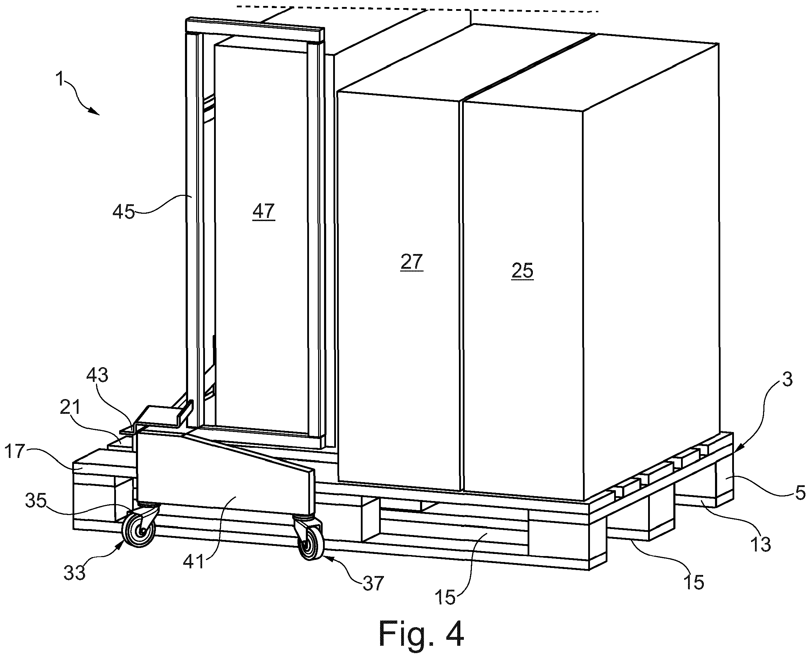

In den Figuren 1 bis 10 ist die erfindungsgemäße Palettengut-Abhebevorrichtung im Allgemeinen mit der Bezugsziffer 1 versehen. Die Abhebevorrichtung 1 steht vor einer Standardpalette 3, nämlich einer Europalette, die eine Abmessung von 800 x 1200 mm aufweist. Die Standardpalette hat sechs Säulenblöcke 5, die durch Längsbodenbretter 7 an der Unterseite und Querzwischenbretter 11 zum Bilden der Tragstruktur der Standardpalette 3 aneinander befestigt sind. Die Tragstruktur 13 bildet seitliche Eingriffsöffnungen 15 in Querrichtung Q und Längsrichtung L, in die Gabelstaplerzinken (nicht dargestellt) einfahren können.

Die Auflage 17 der Standardpalette 3 wird durch fünf sich in Längsrichtung L erstreckende Auflageplatten oder -bretter 21 gebildet, die benachbart zueinander einen sich in Längsrichtung L erstreckenden Längsspalt 23 definieren, der zur Paletten-Oberseite offen ist. Die Längsspalten 23 erstrecken sich in Längsrichtung L von der kürzeren Querseite (800 mm) zur gegenüberliegenden Seite. Es sei klar, dass es bei dem erfindungsgemäßen Einsatz der Palettengut-Abhebevorrichtung nicht darauf ankommt, dass die Längserstreckung der Längsspalten 23 durchgehend ist. Vielmehr bedarf es einen Längsspalt lediglich an den Längs- oder Querseiten der Standardpalette 3 im Bereich der Auflage 17. Die Längserstreckung der Längsspalten sollte derart bemessen sein, dass die noch später beschriebenen Zinken 51 der Palettengut-Abhebevorrichtung weit genug in die Längsspalten 23 einfahren können.

Auf der Standardpalette 3 sind bereits zwei quaderförmige, zick-zack-gefaltete Papierbahnstapel 25, 27 angeordnet, deren Quer- und Tiefenabmessung an die Standardpalette angepasst ist.

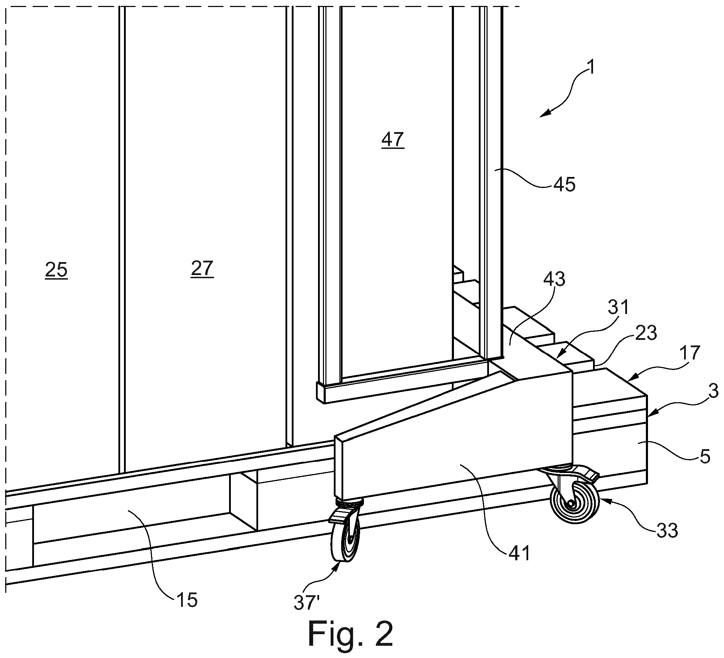

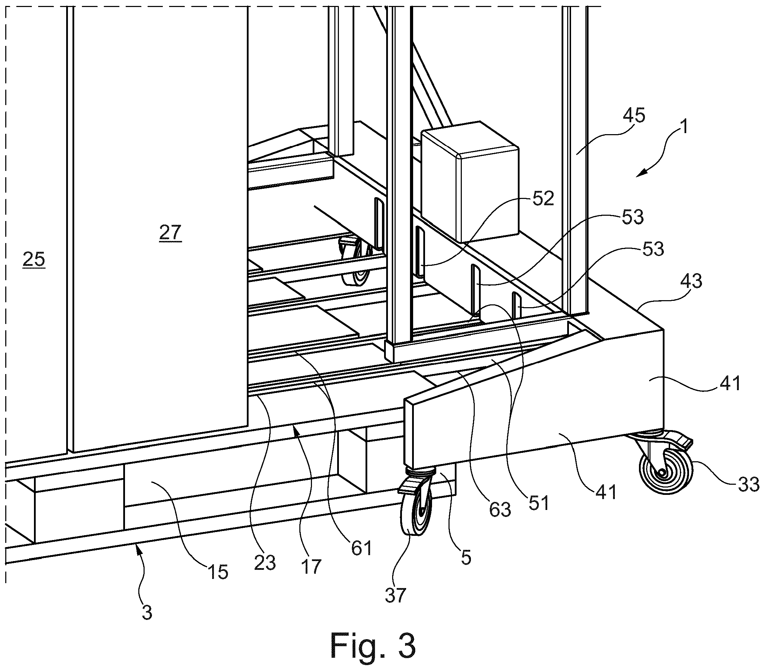

Die erfindungsgemäße Palettengut-Abhebevorrichtung 1 umfasst ein Fahrgestell 31 mit vier feststellbaren um eine vertikale Lagerachse V frei drehbare, feststellbare Räder 33, um die Palettengut-Abhebevorrichtung in Querrichtung Q und Längsrichtung L beliebig verfahren zu können. Die Räder 33 können als sogenannte Lenkrollen ausgebildet sein, die auch als Castorräder bezeichnet sind. Die Lenkrollen sind nicht angetriebene Stützräder, die sich selbstständig zur Bewegungsrichtung der Palettengut-Abhebevorrichtung ausrichten. Das Fahrgestell hat ein Hinterradpaar 34 und ein Vorderradpaar 37, wobei die Vertikallagerachsen V der Vorderräder 37 bzw. Hinterräder 34 derart in Querrichtung Q beabstandet sind, dass das Fahrgestell seitlich an der Längsseite (1200 mm) vorbeifahren kann, wie in Figur 2 und 3 ersichtlich ist.

Das in Draufsicht U-förmige Fahrgestell 31 hat zwei parallel zueinander laufende Radtragschenkel 41, 42, die zum Einfahren der Palettengut-Abhebevorrichtung über die Standardpalette 3 parallel zur Längsrichtung L verlaufen, wie in den Figuren 1 bis 4 dargestellt ist.

Der Radtragschenkel 41 ist an einer Querstrebe 43 befestigt, an der zwei seitliche Stützrahmen 45 befestigt sind, die als Paar dazu dienen, den zu transportierenden Papierstapelvorrat 47 auf der Abhebevorrichtung 1 zu halten. An der Querstrebe 43 sind die weiteren Funktionsbauteile der Abhebevorrichtung gelagert.

Mit dem Fahrgestell 31 hat die Abhebevorrichtung 1 eine Wagenfunktion und ist in alle Richtungen verschiebbar hin zu der Standardpalette 3 verfahrbar.

Beweglich gelagert, und zwar in Höhenrichtung verschiebbar, sind eine Anordnung von Zinken 51 vorgesehen, die identisch dimensioniert sind. Die Zinken 51 erstrecken sich senkrecht zu der Querstrebe 43 des Gestells. Die Zinken sind miteinander starr über eine stabartige Trägerbasis 52 miteinander gekoppelt, die im Inneren der Querstrebe 43 in Höhenrichtung verlagerbar ist. Die Zinken verlaufen parallel zueinander und zu den Längsspalten 23, wenn die wagenartige Abhebevorrichtung 1, wie in den Figuren 1 bis 3 dargestellt ist, zum Be- und Entladen relativ zu der Palette 3 ausgerichtet ist. In der Figur 1 dargestellten, vorbereiteten Abgebeposition der Palettengut-Abhebevorrichtung 1 befinden sich beide Radtragschenkel 41, 42 vor der Standardpalette 3 und jeweils seitlich neben einer gedachten Verlängerung der Längsseite der Auflage 17 der Standardpalette 3, um eingeschoben zu werden und die Zinken 51 über der Standardpalette 3, ausgerichtet mit den Längsspalten 23, einzufahren.

Um die Zinken 51 relativ zum Fahrgestell 31 in Höhenrichtung zu verlagern, ist ein nicht näher dargestellter Hubantrieb vorgesehen, der manuell beispielsweise mit einem Tretpedal 71 betätigbar ist. Eine Auslösevorrichtung dient dazu, die Zinkenanordnung samt dem darauf liegenden Transportgut vorübergehend von dem Hubantrieb zu trennen und unter dem Einfluss deren Gewichtes absinken zu lassen. Zum Abbremsen der Absenkbewegung ist eine Dämpfungsvorrichtung (nicht dargestellt) mit der Zinkenanordnung verbunden.

In Figur 1 sind die Zinken 51 in einer maximal angehobenen Position dargestellt, so dass die Unterseite der Zinken 51 oberhalb der Oberseite der Auflage 17 der Standardpalette 3 ist.

Wie in Figur 3 ersichtlich ist, sind die zueinander parallelen Zinken 51 in Mittelachsenabständen in Querrichtung Q angeordnet, die den Mittelabständen der Längsspalten 23 entsprechen, so dass die Zinken 51 bei einer Verfahrbewegung der Abhebevorrichtung 1 in Längsrichtung L in die Längsspalten 23 kontaktfrei ein- und ausfahrbar sind, ohne die Papierbahnstapel 25, 27 mit dem Zinken 51 weiter zu betätigen. Der Hubantrieb 70 ist lediglich dazu geeignet, die Zinken 51 um wenige Zentimeter, vorzugsweise um bis zu zehn Zentimeter, anzuheben. Die Querstrebe 43 hat vier Höhenschlitze 53, durch die sich die Zinken 51 erstrecken.

Die Zinken 51 haben einen verjüngenden Spitzenabschnitt 61, der in einen Mittenabschnitt 63 übergeht, der in Längsrichtung L einen gleichmäßigen Querschnitt aufweist. Die Breite (in Querrichtung Q) des Zinkens 51 ist geringer als 40 mm, vorzugsweise etwa 20 mm, wobei die Zinken 51 in Höhenrichtung kleiner als 20 mm, vorzugsweise bei etwa 10 mm, sind. Auf diese Weise ist sichergestellt, dass die Zinken 51 in die Längsspalten 23 der Standardpalette 3 einfahren können, ohne das Transportgut 25, 27 zu berühren.

In Figur 2 ist die wagenartige Abhebevorrichtung 1 eingefahren, wobei die Zinkenanordnung abgesenkt ist, um den Papierbahnstapel 47 auf die Standardpalette 3 abzusetzen. In dieser Betriebssituation sind die Zinken 51 in die Längsspalten 23 versenkt, wodurch die Abhebevorrichtung 1 von dem Papierbahnstapel befreit ist, und wobei die Zinkenanordnung von der Standardpalette 3 weg zurückgezogen werden kann, wie in Figur 3 dargestellt ist.

Die wagenartige Abhebevorrichtung 1 kann mit einem neuen Papierbahnstapel beladen werden, um den letzten freien Platz der Standardpalette 3 zu beladen.

Wie in Figur 2 ersichtlich ist, fährt die Abhebevorrichtung 1 vollständig mit ihrem Querbalken 43 über die Standardpalette 3, weil das Fahrgestell 31 mit der Querstrebe 43 derart hoch gelagert ist, dass ein im Wesentlichen kontaktloses Überfahren der Standardpalette 3 ermöglicht ist. Vorzugsweise liegt die Querstrebe 43 in Bezug auf die ebene Abrollfläche (nicht dargestellt) der Räder 33 in einem Höhenabstand von über 140 mm bis 300 mm.

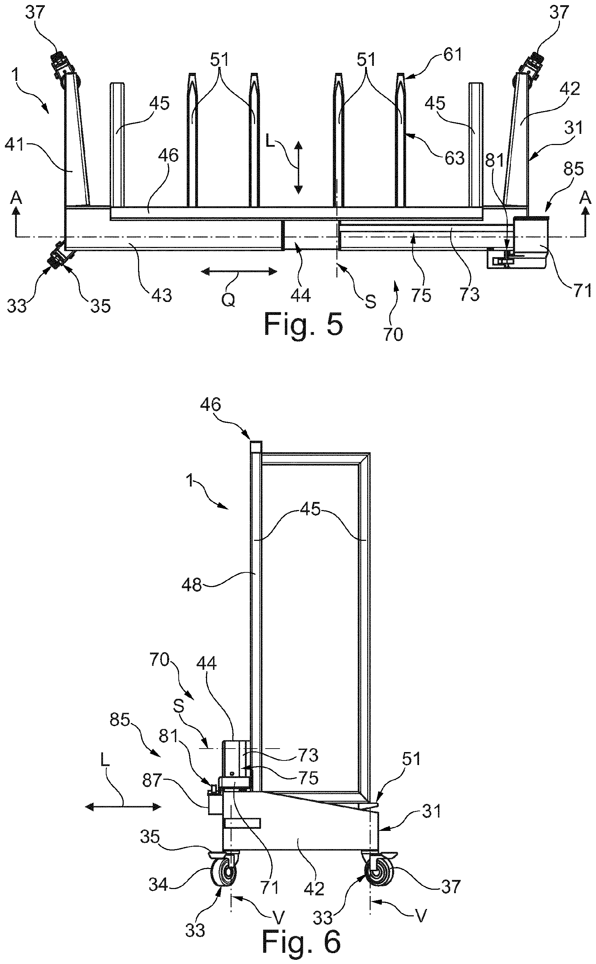

In der in Figur 5 dargestellten Draufsicht ist die durch den linken und rechten Radtragschenkel 41, 42 und die Querstrebe 43 gebildete U-Form des Fahrgestells 31, bei dem sich zwischen dem Vorderradpaar 37 kein Gestellbalken erstreckt, gut zu erkennen. Parallel zwischen den Radtragschenkeln 41, 42 erstrecken sich die Zinken 51 ausgehend von dem Querbalken 43 in Längsrichtung ebenso weit wie die Radtragschenkel 41, 42.

Figur 6 zeigt die Abhebevorrichtung mit den Zinken 51 in deren maximal angehobener Position, die auch in Figur 1 zu sehen ist. Wie in Figur 5 ist auch in Figur 6 zu erkennen, dass die Zinken 51 in Längsrichtung L in etwa in einer Ebene mit dem Radtragschenkel 42 enden. Dadurch ist sichergestellt, dass der Schwerpunkt eines Papierbahnstapels 47, wenn dieser in Längsrichtung L vollständig auf den Zinken 51 aufliegt, in etwa mittig zwischen den vertikalen Lagerachsen V der Räder 33 angeordnet ist, so dass der Papierbahnstapel auf diese Weise gegen ein Herabfallen von der Abhebevorrichtung 1 gesichert ist. Ferner sind in Figur 6 die Arretierhebel 35 der Räder 33 zu erkennen, mit denen die Räder 33 blockierbar sind, um ein unbeabsichtigtes Verfahren der Abhebevorrichtung zu verhindern.

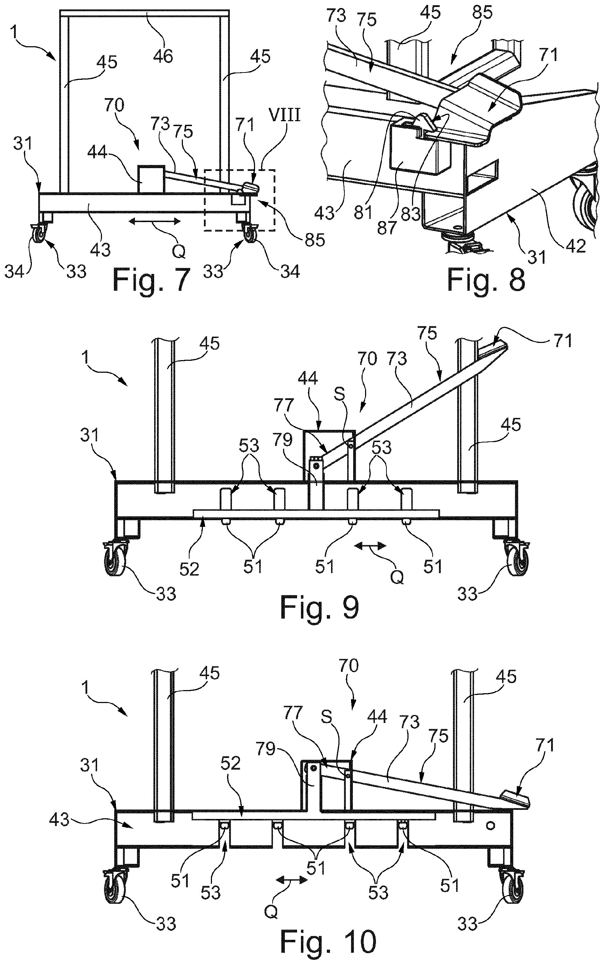

Figur 7 zeigt eine Rückansicht der Abhebevorrichtung 1, in der auch der Querbalken 46 am oberen Ende der Stützarme 45 gezeigt ist, welcher eine Versteifung der Stützarme 45 gegen ein quer-Verkippen bewirkt. Der Querbalken 46 ist in vertikaler Verlängerung am oberen Ende des hinteren, oberhalb der Querstrebe 43 angeordneten Vertikalbalkens 48 des Stützrahmens 45 befestigt. Weitere Querbalken können an der zinkenfernen Rückseite des Vertikalbalkens 48 oder in Längsrichtung L in einer Ebene mit dem Querbalken 46 und den Vertikalbalkens 48 angeordnet sein, um den Papierbahnstapel 47 gegen einen herausfallen zu sichem.

In der Rückansicht der Abhebevorrichtung 1 gemäß Figur 7 ist der Hubantrieb 70 zu sehen, der teilweise in einem Getriebegehäuse 44 an der Querstrebe 43 untergebracht ist. Aus dem Getriebegehäuse 44 erstreckt sich in Querrichtung Q ein Betätigungshebel 75 einer Wippe 73 des Hubantriebs 70, welcher in einem Tretpedal 71 endet. Figur 7 zeigt eine aktive oder betätigte Stellung der Wippe 73, in der sich die Zinken 51 in ihrer maximal angehobenen Position befinden, wobei das Tretpedal 71 durch eine Haltevorrichtung 85 fixiert ist.

Die Haltevorrichtung 85 ist im Detail in Figur 8 entsprechend dem Ausschnitt VIII von Figur 7 dargestellt. Die Haltevorrichtung 85 umfasst eine Rastnase 81, die an dem Fahrgestell 31 beweglich gelagert ist und einrastend mit dem Tretpedal 71 der Wippe 73 zusammenwirken kann. Die Rastnase 81 ist in einer Rastnaseaufnahme 87 beweglich geführt, so dass sie sich zwischen der in Figur 8 dargestellten Halteposition, in der sie die Wippe 73 fixiert, und einer (nicht dargestellten) Freigabeposition bewegen kann, in der die Rastnase eine Bewegung der Wippe 73 um die Schwenkachse S zulässt. Die Rastnase 81 hat eine Gleitfläche 83, die beim Betätigen der Wippe 73 von dem Tretpedal 71 berührt wird, wodurch die Rastnase 81 entgegen der Kraft einer (nicht dargestellten) Feder innerhalb der Rastnasenaufnahme 87 derart ausgelenkt wird, dass sich die Wippe 73 in ihre aktive Stellung bringen lässt.

Die aktive Stellung der Wippe 73 des Hubantriebs 70 zeigt auch Figur 10, dagegen illustriert Figur 9 eine passive oder gelöste Stellung der Wippe 73, in der sich die Zinken 51 in der auch in Figur 3 gezeigten tiefsten Absenkposition befinden, in welcher die Zinken 51 in den Längsspalten 23 der Standardpalette 3 verfahrbar sind, ohne dass auf der Standardpalette 3 liegende Papierbahnstapel 25, 27 von den Zinken 51 notwendigerweise berührt werden.

In den Figuren 9 und 10 ist zu erkennen, dass die Wippe 73 des Hubantriebs 70 um eine ortsfest an dem Getriebegehäuse 44 des Fahrgestell 31 angeordnete Schwenkachse S beweglich gelagert ist. Innerhalb des Getriebegehäuses 44 ist der Lasthebel 77 der Wippe 73 angeordnet, an dem über ein weiteres Schwenkgelenk der Verbindungsstab 79 angelenkt ist, der fest mit der Trägerbasis 52 der Zinken 51 verbunden ist, beispielsweise verschweißt oder verschraubt.

Indem die Wippe 73 des Hubantriebs 70 aus der passiven Stellung gemäß Figur 9 in die aktive Stellung gemäß Figur 10 bewegt wird, etwa dadurch, dass eine Bedienperson das Tretpedal 71 betätigt, werden die über die Trägerbasis 52 und den Verbindungsstab 79 mit dem Lasthebel 77 der Wippe 73 kraftübertragungsgemäß verbundenen Zinken 51 angehoben.

Aufgrund dessen, dass die Länge des Betätigungshebels 75 zwischen der Schwenkachse S und dem Tretpedal 71 etwa viermal so lang ist wie die Länge des Lasthebels 77 zwischen der Schwenkachse S und dem Anlenkpunkt der Wippe 73, wird die von einer Bedienperson aufgebrachte Betätigungskraft in eine viermal so große Kraft zum Anheben des Papierbahnstapels umgewandelt.

Ein Verkippen des Papierbahnstapels auf den Zinken 51 um den Anlenkpunkt des Verbindungsstabs 79 ist dadurch vermieden, dass der Verbindungsstab 79 in Querrichtung etwa mittig an der Trägerbasis 52 zwischen den Zinken 51 befestigt ist, sowie dadurch, dass die Zinken 51 in den Höhenschlitzen 53 vertikal geführt sind.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein, sofern sie im Rahmen der beigefügten Ansprüche liegen.
- 79: Verbindungsstab
- 81: Rastnase
- 83: Gleitfläche
- 85: Haltevorrichtung
- 87: Rastnasenaufnahme

- A-A: Schnittebene
- L: Längsrichtung
- Q: Querrichtung
- S: Schwenkachse
- V: vertikale Lagerachse

## Patentansprüche

1. Palettengut-Abhebevorrichtung zum Be- und Entladen einer Transport-Palette, wie einer Standardpalette (3), beispielsweise einer Europalette, mit einer Paletten-Tragstruktur, die seitliche Eingreiffreiräume (15) beispielsweise für einen Gabelstapler bildet, und einer die Paletten-Oberseite bildenden Auflage (17) auf der das jeweilige Transport- oder Palettengut abzulegen ist und die aus mehreren in einem Abstand zueinander unter Ausbildung wenigstens zweier, vorzugsweise von vier, parallel zueinander liegender Längsspalten (23) angeordneten Längsplatten, wie Längsbrettern (21), besteht, wobei die Längsspalten (23) zur Paletten-Oberseite hin offen sind, umfassend ein Traggestell, eine an dem Traggestell anhebbar gelagerte Zinkenanordnung von wenigstens zwei, vorzugsweise vier, Zinken (51) mit paralleler Erstreckungsrichtung zum Anheben sowie Aufnehmen des Transportguts von der Transportpalette und/oder zum Ablegen des Transportguts auf die Transportpalette, wobei ein Zinkenabstand zweier Zinken (51) an einen Spaltenabstand zweier Längsspalten (23) angepasst ist und zumindest die wenigstens zwei Zinken (51) an die wenigstens zwei Längsspalten (23) derart formangepasst sind, dass sie in Längsrichtung der Längsspalten einfahrbar sind, wobei eine Höhenabmessung der wenigstens zwei Zinken (51) insbesondere an deren Transportgut-Tragabschnitt höchstens 25 mm oder höchstens 22 mm ist, wobei die Breitenabmessung insbesondere am Transportgut-Tragabschnitt höchstens 40 mm oder höchstens 30 mm ist, wobei der Querschnitt der Zinken (51) insbesondere längs des Transportgut-Tragabschnitts im Wesentlichen unverändert ist.

2. Palettengut-Abhebevorrichtung nach Anspruch 1, bei der bei einer Anordnung von vier Zinken (51) ein Abstand in Querrichtung Q der beiden äußerer Zinken bei etwa 100 mm bis 120 mm liegt, wobei insbesondere der Mittelabstand in Querrichtung Q der beiden Mittelzinken bei 140 mm bis 160 mm liegt.

3. Palettengut-Abhebevorrichtung nach einem der vorstehenden Ansprüche, bei der die wenigstens zwei Zinken an einem insbesondere fahrbaren Gestell (31) in Höhenrichtung durch eine Hubeinrichtung verlagerbar sind, die an das Gestell (31) gelagert ist und insbesondere dazu ausgelegt ist, das Transportgut höchstens 10 mm bis 20 mm linear anzuheben, wobei insbesondere die Hubeinrichtung ein Getriebe, insbesondere ein Schrittgetriebe, das von einer Bedienperson manuell betätigbar ist, und eine Absenkeinrichtung umfasst, die bei deren Betätigung die Zinkenanordnung unter dem Einfluss deren Gewichtskraft insbesondere gedämpft in eine Transportgutübergabeposition absenken kann.

4. Palettengut-Abhebevorrichtung nach einem der vorstehenden Ansprüche, bei der das insbesondere fahrbare Gestell (31) in Draufsicht eine U-Form oder eine H-Form aufweist, wobei seitlich ausgelagerte Schenkel (41) durch eine Querstrebe (43) miteinander starr verbunden sind, die vorzugsweise zur gehäuseartigen Aufnahme eines Getriebes, insbesondere Schrittgetriebes, einer Hubeinrichtung hohl ausgebildet ist.

5. Palettengut-Abhebevorrichtung nach einem der vorstehenden Ansprüche, bei der ein Fahrgestell (31) wenigstens zwei vorzugsweise feststellbare Räder aufweist, die derart in einem zur Längsrichtung senkrechten Abstand (in Querrichtung Q) voneinander angeordnet sind, dass sie bei einer Rollbewegung in Längsrichtung parallel zu den Längsseiten der Transport-Palette vorbei gelangen, wobei insbesondere eines der wenigstens zwei Räder an einem der seitlich ausgelagerten Schenkeln (41) des Fahrgestells (31) angeordnet ist.

6. Palettengut-Abhebevorrichtung nach einem der vorstehenden Ansprüche, bei der ein Fahrgestell (31) wenigstens zwei vorzugsweise feststellbare Räder, insbesondere ein in Längsrichtung vorderes Radpaar und ein hinteres Radpaar aufweist, wobei ein Abstand in Querrichtung Q mindestens 800 mm und höchstens 1000 mm oder 900 mm beträgt.

7. Palettengut-Abhebevorrichtung nach einem der vorstehenden Ansprüche 3 bis 6, bei der an dem Gestell seitliche Stützen für das Transportgut unverstellbar befestigt sind, die vorzugsweise als Rahmen (45) ausgeführt sind, der insbesondere derart positioniert ist, dass eine untere Längsstrebe auf der Höhe liegt, in der die Zinken (51) maximal anhebbar sind.

8. Palettengut-Abhebevorrichtung nach einem der vorstehenden Ansprüche, bei der die Zinkenanordnung eine Trägerbasis (52) aufweist, die beweglich an einem Gestell der Palettengut-Abhebevorrichtung gelagert ist und/oder sich im Wesentlichen in Querrichtung Q senkrecht zur den Zinken (51) erstreckt, wobei insbesondere die Zinken (51) an der Trägerbasis (52) in Querrichtung Q verstellbar und fixierbar sind, um an einem unterschiedlichen Längsspaltenabstand anpassbar zu sein, wobei insbesondere die Trägerbasis (52) vorbestimmte Positionsrasten für die Zinken (51) aufweist, deren Position der Lage der Längsspalten (23) unterschiedlicher Transportpaletten entsprechen.

9. Palettengut-Abhebevorrichtung nach Anspruch 8, bei der die Zinken (51) an einer Unterseite der insbesondere stabförmigen Trägerbasis (52) befestigt sind und/oder die Trägerbasis (52) in einem Hohlraum einer Querstrebe (43) des Gestells linear in Höhenrichtung beweglich gelagert ist.

10. Baukastensystem mit einer Palettengut-Abhebevorrichtung (1) nach einem der vorstehenden Ansprüche, wobei die Zinkenanordnung oder die wenigstens zwei Zinken (51) an der Abhebevorrichtung (1) austauschbar sind und je nach Einsatz für eine vorbestimmte Transport-Palette aus einem Satz Zinkenanordnungen und/oder Zinken (51) auszuwählen sind, um an der Palettengut-Abhebevorrichtung (1) betriebsgemäß montiert zu werden.

## Claims

1. Lifting device for loading and unloading of pallet goods onto and from a transport pallet, such as a standard pallet (3), for example a euro pallet, with a pallet support structure forming lateral access clearances (15) for example for a lift truck, and a rest (17) forming the upper side of the pallet on which the respective transport or pallet goods is to be deposited and which comprises a plurality of longitudinal panels, such as longitudinal boards (21), spaced apart from each other by forming at least two, preferably four, longitudinal gaps (23) arranged parallel to each other, wherein the longitudinal gaps (23) are open to the upper side of the pallet, the lifting device comprising a support frame, a tine assembly, which is liftably mounted on the support frame, of at least two, preferably four, tines (51) extending parallel to each other for lifting and receiving the transport goods from the transport pallet and/or for depositing the transport goods on the transport pallet, wherein a tine spacing of two tines (51) is adapted to a gap spacing of two longitudinal gaps (23) and at least the at least two tines (51) are adapted in shape to the at least two longitudinal gaps (23) in such a way that they can be retracted in the longitudinal direction of the longitudinal gaps, wherein a height dimension for the at least two tines (51) particularly at their transport goods carrying section is at most 25 mm or at most 22 mm, wherein a width dimension particularly at the transport goods carrying section is at most 40 mm or at most 30 mm, wherein the cross-section of the tines (51) is substantially unchanged particularly along the transport goods carrying section.

2. Lifting device for pallet goods according to claim 1, wherein, with an arrangement of four tines (51), a distance in a transverse direction Q of the two outer tines is about 100 mm to 120 mm, wherein particularly the middle distance in the transverse direction Q of the two middle tines is 140 mm to 160 mm.

3. Lifting device for pallet goods according to any one of the preceding claims, wherein the at least two tines are movable at the particularly movable frame (31) in a height direction by a lifting device mounted on the frame (31) and being particularly configured to linearly lift the transport goods at most 10 mm to 20 mm, wherein particularly the lifting device comprises a transmission, particularly a stepping gear, which is manually operable by an operator, and a lowering device which, upon actuation, can lower the tine assembly under the influence of its weight, in particular in a damped manner, into a transport goods transferring position.

4. Lifting device for pallet goods according to any one of the preceding claims, wherein the particularly movable frame (31) comprises a U-shape or an H-shape in a top view, wherein laterally extending legs (41) are rigidly connected to each other via a cross bar (43) preferably designed hollow for housing a transmission, particularly a stepping gear, of a lifting device.

5. Lifting device for pallet goods according to any one of the preceding claims, wherein a chassis (31) comprises at least two preferably lockable wheels which are spaced apart from each other at a distance perpendicular to the longitudinal direction (in the transverse direction Q) in such a way that they pass parallel to the longitudinal sides of the transport pallet during a rolling motion in the longitudinal direction, wherein particularly one of the at least two wheels is arranged at one of the two laterally extending legs (41) of the chassis (31).

6. Lifting device for pallet goods according to any one of the preceding claims, wherein the chassis (31) comprises at least two preferably lockable wheels, particularly a front pair of wheels in the longitudinal direction and a rear pair of wheels, wherein a distance in the transverse direction Q is at least 800 mm and at most 1000 mm or 900 mm.

7. Lifting device for pallet goods according to any one of the preceding claims 3 to 6, wherein lateral supports for the transport goods are unadjustably attached to the frame, which are preferably realized as a frame structure (45) which is particularly positioned in such a way that a lower longitudinal bar is located at the height at which the tines (51) are maximally liftable.

8. Lifting device for pallet goods according to any one of the preceding claims, wherein the tine assembly comprises a carrier base (52) movably mounted on a frame of the lifting device for pallet goods and/or extending substantially in a transverse direction Q perpendicular to the tines (51), wherein particularly the tines (51) are adjustable and fixable at the carrier base (52) in the transverse direction Q to be adaptable to a different longitudinal gap spacing, wherein particularly the carrier base (52) comprises predetermined position detents for the tines (51), the position of which corresponds to the position of the longitudinal gaps (23) of different transport pallets.

9. Lifting device for pallet goods according to claim 8, wherein the tines (51) are attached to an underside of the particularly rod-shaped carrier base (52) and/or the carrier base (52) is linearly movably mounted in the height direction in a cavity of a cross bar (43) of the frame.

10. Modular system with a lifting device (1) for pallet goods according to any of the preceding claims, wherein the tine assembly or the at least two tines (51) are interchangeable at the lifting device (1) and are to be selected for a predetermined transport pallet depending on the use from a set of tine assemblies and/or tines (51) in order to be mounted to the lifting device (1) for pallet goods in an operational manner.

## Revendications

1. Dispositif de relevage de marchandises palettisées, destiné à charger et à décharger une palette de transport, telle qu'une palette standard (3), par exemple une Europalette, pourvu d'une structure porteuse de palettes, qui constitue des espaces libres d'engagement (15) latéraux, par exemple pour un chariot élévateur et d'une surface de dépose (17) constituant la face supérieure de la palette sur laquelle la marchandise transportée ou palettisée concernée doit être déposée et qui consiste dans plusieurs plaques longitudinales, telles que des planches longitudinales (21), situées avec un espacement mutuel, en créant au moins deux, de préférence quatre fentes longitudinales (23), situées à la parallèle les unes des autres, les fentes longitudinales (23) étant ouvertes vers la face supérieure de la palette, comprenant un bâti porteur, un ensemble de dents, logé de manière relevable sur le bâti porteur composé de deux, de préférence de quatre dents (51) avec une direction d'extension parallèle, pour relever et pour réceptionner la marchandise à transporter à partir de la palette de transport et / ou pour déposer la marchandise à transporter sur la palette de transport, un espacement de dents entre deux dents (51) étant adapté à un espacement de fente entre deux fentes longitudinales (23) et au moins les au moins deux dents (51) étant adaptées par leur forme aux au moins deux fentes longitudinales (23), de sorte à pouvoir rentrer dans la direction longitudinale des fentes longitudinales, une dimension en hauteur des au moins deux dents (51), notamment sur leur partie porteuse de la marchandise à transporter étant d'au maximum 25 mm ou d'au maximum 22 mm, la dimension en largeur, notamment sur la partie porteuse de la marchandise à transporter étant d'au maximum 40 mm ou d'au maximum 30 mm, la section transversale des dents (51), notamment le long de la partie porteuse de la marchandise à transporter étant sensiblement invariable.

2. Dispositif de relevage de marchandises palettisées selon la revendication 1, sur lequel dans le cas d'un ensemble de quatre dents (51), un espacement dans la direction transversale Q des deux dents extérieures se situe à environ de 100 mm à 120 mm, notamment l'espacement moyen dans la direction transversale Q des deux dents centrales se situant à de 140 mm à 160 mm.

3. Dispositif de relevage de marchandises palettisées selon l'une quelconque des revendications précédentes, sur lequel les au moins deux dents sont déplaçables en hauteur sur un bâti (31) notamment mobile par un système de levage, qui est logé sur le bâti (31) et qui est conçu notamment pour relever de manière linéaire la marchandise à transporter d'au maximum 10 mm à 20 mm, notamment le système de levage étant une transmission, notamment une transmission pas-à-pas, qui est actionnable manuellement par un opérateur et comprenant un système d'abaissement, qui lors de son actionnement est susceptible d'abaisser l'ensemble de dents sous l'influence de leur force de pesanteur notamment de manière amortie dans une position de transfert de la marchandise à transporter.

4. Dispositif de relevage de marchandises palettisées selon l'une quelconque des revendications précédentes, sur lequel, vu en élévation, le bâti (31) notamment mobile présente la forme d'un U ou la forme d'un H, des branches (41) latéralement déportées étant reliées les unes aux autres de manière rigide par une traverse (43), qui pour recevoir à la manière d'un carter une transmission, notamment une transmission pas-à-pas d'un système de levage est conçue de préférence de forme creuse.

5. Dispositif de relevage de marchandises palettisées selon l'une quelconque des revendications précédentes, sur laquelle un châssis (31) comporte aux moins deux roues de préférence immobilisables, qui sont placées de telle sorte avec un espacement mutuel perpendiculaire à la direction longitudinale (dans la direction transversale Q) tel, que lors d'un déplacement roulant dans la direction longitudinale, elles arrivent à la parallèle devant les faces longitudinales de la palette de transport, notamment l'une des au moins deux roues étant placée sur l'une des branches (41) latéralement déportées du châssis (31).

6. Dispositif de relevage de marchandises palettisées selon l'une quelconque des revendications précédentes, sur lequel un châssis (31) comporte au moins deux roues, de préférence immobilisables, notamment une paire de roues avant dans la direction longitudinale et une paire de roues arrière, un espacement dans la direction transversale Q s'élevant au minimum à 800 mm et au maximum à 1000 mm ou à 900 mm.

7. Dispositif de relevage de marchandises palettisées selon l'une quelconque des revendications précédentes 3 à 6, sur lequel sur le bâti sont fixés de manière non réglable des supports latéraux pour la marchandise à transporter, qui sont réalisés de préférence sous la forme d'un cadre (45) qui est notamment positionné de telle sorte qu'un longeron inférieur se situe au niveau jusqu'auquel les dents (51) sont relevables au maximum.

8. Dispositif de relevage de marchandises palettisées selon l'une quelconque des revendications précédentes, sur lequel l'ensemble de dents comporte une base porteuse (52), qui est logée de manière déplaçable sur un bâti du dispositif de relevage de marchandises palettisées et / ou qui s'étend sensiblement dans la direction transversale Q, à la perpendiculaire des dents (51), notamment les dents (51) étant susceptibles d'être ajustées et fixées dans la direction transversale Q sur la base porteuse (52), pour être adaptables à un espacement différent des fentes longitudinales, notamment la base porteuse (52) comportant des crans de positionnement prédéfinis pour les dents (51), dont la position correspond à l'emplacement des fentes longitudinales (23) de différentes palettes de transport.

9. Dispositif de relevage de marchandises palettisées selon la revendication 8, sur lequel les dents (51) sont fixées sur une face inférieure de la base porteuse (52) notamment en forme de barre et / ou la base porteuse (52) est logée de manière linéairement déplaçable en hauteur dans une cavité d'une traverse (43) du châssis.

10. Système modulaire, pourvu d'un dispositif de relevage de marchandises palettisées (1) selon l'une quelconque des revendications précédentes, l'ensemble de dents ou les au moins deux dents (51) étant interchangeables sur le dispositif de relevage (1) et en fonction de l'utilisation pour une palette de transport prédéfinie, étant sélectionnables parmi un jeu d'ensembles de dents et / ou de dents (51), pour être montées fonctionnellement sur le dispositif de relevage de marchandises palettisées (1).
